# FASCICULE DE BREVET EUROPEEN

(11) **EP 3 526 100 B1**
(45) Date de publication et mention de la délivrance du brevet: **01.09.2021**
(21) Numéro de dépôt: 17792129.3
(22) Date de dépôt: 16.10.2017
(51) Int. Cl.: B62D 1/06

(54) **VOLANT POUR VÉHICULE AUTOMOBILE AUTONOME**
LENKRADANORDNUNG FÜR EIN AUTONOMES KRAFTFAHRZEUG
STEERING WHEEL FOR AUTONOMOUS MOTOR VEHICLE

(30) Priorité: 17.10.2016 FR 1660030
(43) Date de publication de la demande: 21.08.2019
(73) Titulaire: RENAULT s.a.s., 92100 Boulogne-Billancourt (FR); NISSAN MOTOR CO., LTD., Yokohama-shi, Kanagawa 221-0023 (JP)
(72) Inventeur: BEZEAULT, Loic, 78150 Le Chesnay (FR)
(74) Mandataire: Rougemont, Bernard
(86) Numéro de dépôt international: PCT/FR2017/052829
(87) Numéro de publication internationale: WO 2018/073518

(56) Documents cités:
- JP-U- S 571 760
- JP-U- S5 964 368
- JP-U- S6 047 670
- JP-U- S57 142 673
- JP-U- S61 205 865
- US-A- 2 326 131

## Description

L'invention concerne un volant de direction pour un véhicule automobile autonome.

Un véhicule automobile autonome est un véhicule pouvant rouler, se diriger et s'adapter au trafic routier, sans intervention du conducteur.

Lorsqu'un tel véhicule automobile fonctionne en autonomie, le passager installé sur le siège conducteur reste libre de reprendre le contrôle du véhicule. Il peut notamment reprendre le contrôle du véhicule automobile en actionnant le volant de direction.

Cependant, lorsqu'il ne souhaite pas contrôler le véhicule, le conducteur adopte alors généralement une posture de repos, qui diffère sensiblement de sa posture de conduite. Dans la posture de repos, le conducteur est fréquemment installé de manière plus confortable sur le siège conducteur. Sa tête repose alors sur l'appui-tête et son buste est généralement plus bas que lorsqu'il conduit.

C'est pourquoi lorsque le conducteur d'un véhicule automobile autonome est dans une posture de repos, son point de vue sur le tableau de bord du véhicule est modifié par rapport à la posture de conduite.

Le volant de direction peut alors obstruer partiellement le champ de vision du conducteur, en particulier lorsqu'il souhaite lire des informations affichées sur l'écran d'affichage installé derrière le volant de conduite, qui est connu sous le terme anglophone de cluster, ou proche de la partie basse du pare-brise, notamment avec des afficheur tête-haute, connus sous le terme anglophone de Head-Up Display, plus généralement abrégé en HUD.

On connaît le document US2326131A relatif à un volant de direction selon le préambule de la revendication 1 conçu pour améliorer la visibilité du conducteur. Cependant un tel volant est d'une fabrication relativement complexe. Les documents JP S59 64368U, JP S571760U et JP S60 47670U décrivent également des volants de direction à parties mobiles.

Pour pallier ce problème, on connaît notamment un volant rétractable apte à passer d'une position de conduite, dans laquelle le conducteur peut l'actionner pour diriger le véhicule, à une position escamotée dans laquelle le volant est entièrement encastré dans le tableau de bord, de sorte à libérer le champ de vision du conducteur.

Cependant, ce type de volant ne permet pas d'assurer une sécurité optimale pour le conducteur, car lorsque le volant est dans la position escamotée, le conducteur ne peut pas reprendre le contrôle du véhicule instantanément, par exemple lors d'une situation d'urgence.

On connait aussi un volant de direction présentant une portion principale en arc, notamment en forme de C, définissant deux extrémités libres et une portion complémentaire en arc elle-même séparée en deux sous arcs aptes à s'escamoter en s'insérant en translation à l'intérieur de la portion en C, respectivement par les deux extrémités libres. Lorsque le véhicule est en fonctionnement autonome, le conducteur peut alors escamoter la deuxième portion en arc, qui correspond sensiblement à un arc supérieur du volant lorsqu'il est monté dans l'habitacle, de sorte qu'il peut lire les informations affichées sur le tableau de bord à l'arrière du volant.

Cependant, une telle solution impose une conception mécanique relativement complexe du volant de direction afin que la portion en arc puisse s'insérer et ressortir dans la portion en C.

Aussi, il existe le besoin d'un volant de direction plus simple, pouvant être adapté pour ne pas gêner la vision du conducteur lorsque ce dernier est dans une posture de repos, tout en permettant une reprise en main instantanée.

A cet effet, on propose un volant de direction pour un véhicule automobile, comprenant un moyeu définissant un axe de rotation, une portion principale sensiblement en arc de cercle solidaire du moyeu et une portion complémentaire en arc solidaire de ladite portion principale.

Ladite portion complémentaire en arc présente deux extrémités opposées montées chacune à rotation sur ladite portion principale en arc, de manière sensiblement diamétralement opposées.

Ainsi, on obtient une structure relativement simple par laquelle il est possible d'escamoter la moitié du volant de direction, en particulier la partie supérieure du volant de direction lorsqu'il est monté dans l'habitacle du véhicule automobile, afin de libérer visuellement l'espace supérieur, tout en maintenant la portion inférieure dans une position de conduite permettant une reprise en main rapide du volant de direction.

Avantageusement, selon l'invention, ladite portion principale définit deux extrémités libres, lesdites deux extrémités opposées étant montées à rotation respectivement auxdites deux extrémités libres de manière à pouvoir pivoter ladite portion complémentaire en arc depuis une position de conduite dans laquelle la principale en arc et la portion complémentaire en arc définissent une forme convexe sensiblement torique, vers une position escamotée dans laquelle la portion complémentaire en arc est pivotée de 180°.

Ainsi, il est possible d'articuler la portion complémentaire de manière relativement simple par rapport à la portion principale. Notamment la rotation peut être effectuée vers l'arrière du véhicule automobile, lorsque le volant est monté dans l'habitacle, ce qui a pour effet d'abaisser la portion complémentaire en la rapprochant du conducteur. Ainsi la rotation peut être relativement plus importante que si elle était effectuée vers le tableau de bord, et le conducteur peut manipuler plus simplement la portion complémentaire, même en position escamotée.

En particulier, ladite portion complémentaire en arc présente une longueur sensiblement égale à ladite portion principale.

Notamment, les portions complémentaires et principales présentent chacune une longueur d'arc supérieure à la moitié du périmètre du volant de direction de sorte que leurs extrémités respectives se chevauchent.

Avantageusement et de manière non limitative, le volant de direction comprend des moyens de rappel de la portion complémentaire vers la position de conduite. Ainsi, on peut permettre un retour automatique de la position escamotée vers la position de conduite, ce qui simplifie la reprise en main du volant par le conducteur automobile.

Avantageusement et de manière non limitative, lesdits moyens de rappel comprennent un ressort de rappel. Ceci permet d'obtenir un moyen de rappel robuste et peu coûteux à produire.

Avantageusement et de manière non limitative, ledit ressort de rappel est solidaire d'une part de la portion principale et d'autre part de la portion complémentaire en arc. Ainsi, le montage du ressort de rappel sur le volant de direction est relativement simple à effectuer.

Avantageusement et de manière non limitative, le volant de direction comprend deux rayons diamétralement opposés s'étendant chacun entre le moyeu et la portion principale en arc, ladite portion complémentaire en arc était montée à rotation à la portion principale au voisinage desdits deux rayons.

Lesdits rayons pouvant être obtenus d'une pièce avec la portion principale.

En particulier, le ressort de rappel peut être installé dans un rayon parmi les deux rayons opposés.

Avantageusement et de manière non limitative, ladite portion principale présente une partie fermée rejoignant les deux rayons diamétralement opposés et deux extrémités libres s'étendant chacune depuis ladite partie fermée à l'opposé des rayons diamétralement opposés. Les deux extrémités libres forment ainsi des parties formant saillie, lorsque le volant est en position escamotée, ce qui simplifie la reprise en main instantanée du volant par le conducteur en cas de besoin.

Avantageusement, le volant de direction comprend des moyens de blocage aptes à bloquer la portion complémentaire en arc dans la position de conduite. Ainsi, on augmente la sécurité de conduite en interdisant un passage accidentel de la portion complémentaire en arc vers la position escamotée, par exemple lorsque le conducteur actionne le volant de direction pour conduire le véhicule automobile.

Avantageusement, les moyens de blocage comprennent au moins un bouton poussoir installé sur la portion complémentaire en arc. Ainsi, la portion complémentaire en arc peut être débloquée, afin d'être escamotée, par pression d'un bouton poussoir situé sur la portion complémentaire en arc, ce qui permet un déblocage simple pour le conducteur.

Avantageusement et de manière non limitative, le volant de direction comprend des moyens de verrouillage aptes à maintenir la portion complémentaire en position escamotée. Ainsi lorsque le volant de direction est en position escamotée la portion complémentaire peut être maintenue fixement de sorte à ne pas gêner le conducteur dans sa position de repos.

Avantageusement et de manière non limitative, le volant de direction comprend des moyens de déverrouillage aptes à autoriser le passage du volant de direction depuis la position escamotée vers la position de conduite. Autrement dit les moyens de déverrouillage permettent de libérer la portion complémentaire fixement maintenu par les moyens de verrouillage afin qu'elle puisse revenir vers la position de conduite.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une vue de face d'un volant de direction dans un position de conduite selon un mode de réalisation de l'invention ;
- la figure 2 est une vue de face d'un volant de direction dans un position escamotée selon le mode de réalisation de la figure 1 ;
- la figure 3 est une vue de détail de la jonction entre la portion complémentaire en arc et la portion principale en arc du mode de réalisation de la figure 1 ;
- les figures 4a et 4b représente une vue de détail des moyens de blocage du volant de direction selon le mode de réalisation de la figure 1 ;

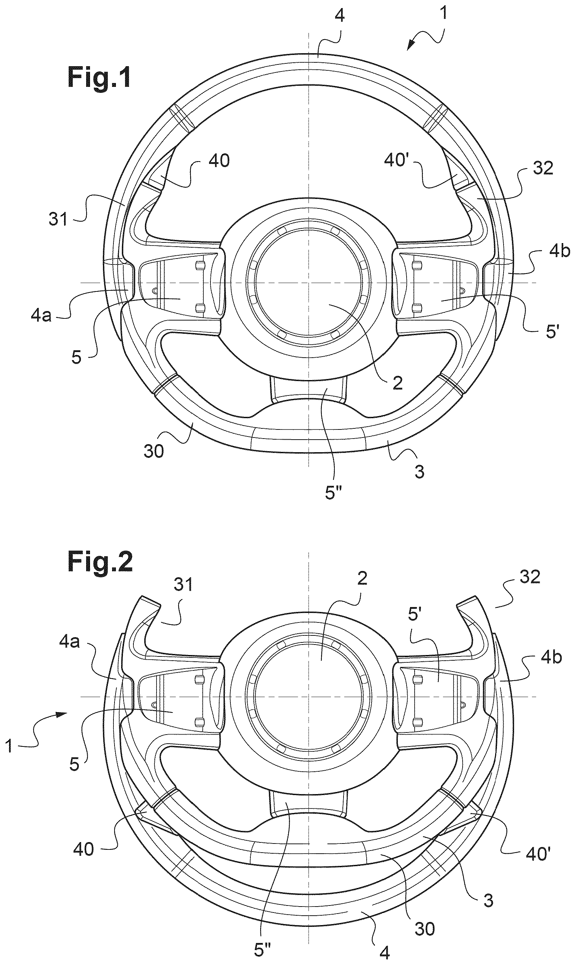

Selon l'invention en référence aux figures 1, 2, 3, 4a et 4b, un volant de direction 1 comprend un moyeu 2, une portion principale en arc 3, aussi appelée portion principale 3, solidaire du moyeu 2, et une portion complémentaire en arc 4.

La portion principale 3 est solidarisée au moyeu 2 par deux rayons 5,5' diamétralement opposés par rapport au moyeu 2, et par un troisième rayon 5" orienté sensiblement perpendiculairement au deux premiers rayons 5', 5".

Les rayons 5, 5', 5" sont obtenus d'une pièce avec la portion principale 3.

La portion principale 3 présente une partie fermée 30 rejoignant les deux rayons 5, 5' diamétralement opposés et deux extrémités libres 31, 32 s'étendant chacune depuis ladite partie fermée 30 à l'opposé des rayons 5, 5' diamétralement opposés. Autrement dit la partie fermée 30 et les deux rayons 5, 5' diamétralement opposés définissent sensiblement un demi-volant fermée, tandis que les deux extrémités libre 31, 32 s'étendent chacune à l'opposé d'un rayon 5, 5' diamétralement opposé par rapport à la partie fermée 30, de sorte à définir deux extrémités préhensibles par le conducteur.

Lorsque le volant 1 est monté dans l'habitacle d'un véhicule automobile, la partie fermée 30 correspond à la partie inférieure du volant, tandis que les deux extrémités libres 31, 32 s'étendent vers le haut, au-delà des rayons 5, 5' diamétralement opposés.

La portion complémentaire en arc 4, aussi appelée portion complémentaire 4, comprend deux extrémités opposées 4a, 4b montées à rotation sur la portion principale 3.

Les extrémités opposées 4a, 4b sont montées chacune au voisinage d'un rayon 5, 5' parmi les deux rayons diamétralement opposés 5, 5'.

La portion complémentaire en arc 4 est alors apte à passer d'une première position, dite position de conduite, représentée figure 1, dans laquelle position dans laquelle la principale en arc 3 et la portion complémentaire en arc 4 définissent une forme convexe sensiblement torique, vers une deuxième position, dite position escamotées, représentée figure 2, dans laquelle la portion complémentaire en arc 4 est rapprochée de la partie fermée 30 de la portion principale en arc 3.

Le passage de la position de conduite vers la position escamotée correspondant à une rotation de la portion complémentaire 4 de 180°.

Aussi en position escamotée, après la rotation de 180°, la portion complémentaire 4 s'étend dans un même plan que la portion principale 3. Autrement dit, en position escamotée, la portion complémentaire 4 entoure la portion principale 3.

La rotation entre la position de conduite et la position escamotées est effectuée tout d'abord en direction du conducteur du véhicule automobile, autrement dit, de l'avant vers l'arrière du véhicule automobile, de sorte que la portion complémentaire 4 est éloignée du tableau de bord.

Lorsque le volant de direction 1 est en position de conduite, tel que représenté figure 1, des moyens de blocage interdise la rotation vers la position escamotée, telle que représentée figure 2.

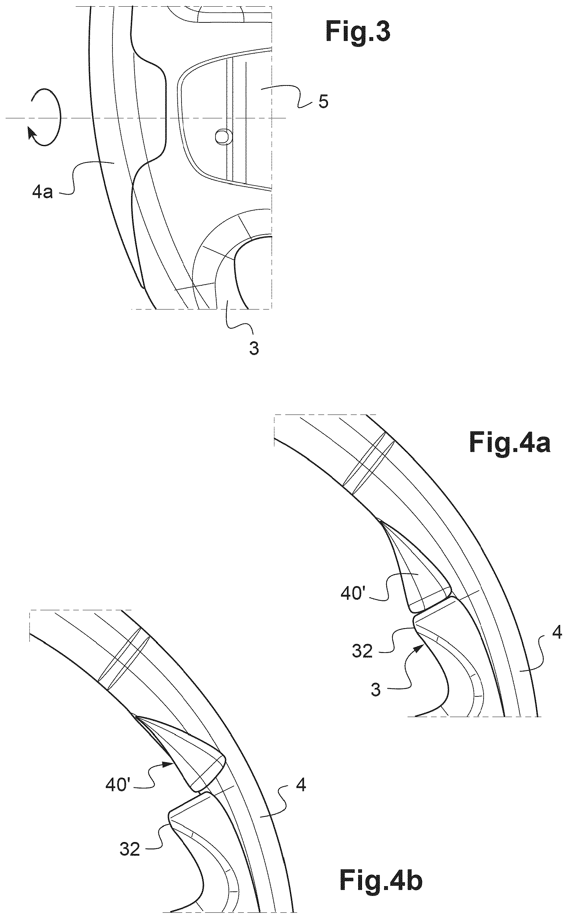

Dans ce mode de réalisation, les moyens de blocage 40, 40', tel que représentés en figure 4a et 4b, comprennent un bouton poussoir 40, 40' associé à chaque extrémité opposée 4a, 4b de la portion complémentaire 4. Autrement dit les moyens de blocage 40, 40' comprennent deux boutons poussoir 40, 40'.

Chaque bouton poussoir 40, 40' est monté sur la portion complémentaire 4, de manière à pouvoir passer d'une position de repos, en référence à la figure 4a, dans laquelle il forme saillie de la portion complémentaire 4a, 4b, vers une position rentrée, en référence à la figure 4b, dans laquelle le bouton poussoir 40, 40' est rentré dans l'épaisseur de la portion complémentaire 4.

Lorsque le volant 1 est en position de conduite, le bouton poussoir 40, 40' dans sa position de repos forme butée contre une extrémité libre 31, 32 de la portion principale 3. Ainsi le bouton poussoir 40,40' maintient la portion complémentaire 4 dans la position de conduite.

Une fois que le bouton poussoir 40, 40' est dans sa position rentrée, il y reste engagé de sorte que la portion complémentaire 4 peut être librement pivotée vers la position escamotée.

En position escamotée, le bouton poussoir 40, 40', est donc maintenu rentré dans la portion complémentaire 4, mais lorsque la rotation de 180°est effectuée, il vient au contact de la portion principale 3, tel que représenté figure 2.

Lorsque la portion complémentaire 4 atteint la position escamotée, elle peut être maintenue par un organe de verrouillage, lui interdisant de pivoter librement. Par exemple, un verrouillage à bouton poussoir (type « push-pull » en anglais). En position escamotée, le volant est bloqué dans la zone 4a, 4b par un système de clapets. Pour le déverrouillage, on pousse la portion complémentaire 4 vers l'avant du véhicule. Les clapets se débloquent lors de ce mouvement de rotation de faible amplitude. Le ressort de rappel permet alors de faire revenir la portion complémentaire 4 dans sa position de conduite.

Selon un mode de réalisation alternatif de l'invention, le volant 1 comprend en outre des moyens de rappel, non représentés, ici un ressort de rappel, par exemple un ressort hélicoïdal, par exemple un ressort de torsion, installé à une extrémité sur la portion principale 3 ou sur un rayon 5, 5' parmi les rayons diamétralement opposés 5, 5' et d'autre part à la portion complémentaire 4 de sorte qu'il est apte à revenir automatiquement de la position escamotée vers la position de conduite.

Les moyens de rappel peuvent aussi comprendre un ressort de rappel par rayon 5, 5' diamétralement opposé de sorte que le rappel s'exerce sur chaque extrémité opposée 4a, 4b de la portion complémentaire 4.

Pour ce mode de réalisation alternatif, un organe de déverrouillage, par exemple un bouton poussoir, ou une commande électrique, non représenté, permet de déverrouiller le blocage de la portion complémentaire 4 en position escamotée de sorte à permettre le rappel de la portion complémentaire 4 par le ressort de rappel de la position escamotée vers la position de conduite.

## Revendications

1. Volant de direction (1) pour un véhicule automobile, comprenant un moyeu (2) définissant un axe de rotation, une portion principale (3) sensiblement en arc de cercle solidaire du moyeu (2) et une portion complémentaire en arc (4) solidaire de ladite portion principale (3), où ladite portion complémentaire en arc (4) présente deux extrémités opposées (4a, 4b) montées chacune à rotation sur ladite portion principale en arc (3), de manière sensiblement diamétralement opposées ;
ladite portion principale (3) définissant deux extrémités libres (3a, 3b), lesdites deux extrémités opposées (4a, 4b) étant montées à rotation respectivement auxdites deux extrémités libres (3a, 3b) de manière à pouvoir pivoter ladite portion complémentaire en arc (4) depuis une position de conduite dans laquelle la portion principale en arc (3) et la portion complémentaire en arc (4) définissent une forme convexe sensiblement torique, vers une position escamotée dans laquelle la portion complémentaire en arc (4) est pivotée de 180° par rapport à la position de conduite,
**caractérisé en ce que** la portion complémentaire (4) dans la position escamotée s'étend dans un même plan que la portion principale (3) en entourant cette dernière;
ledit volant comprenant des moyens de blocage (40, 40') aptes à bloquer la portion complémentaire en arc (4) dans la position de conduite ; et
les moyens de blocage (40, 40') comprenant au moins un bouton poussoir (40, 40') installé sur la portion complémentaire en arc (4).

2. Volant de direction (1) selon la revendication 1, **caractérisé en ce que** ladite portion complémentaire en arc (4) présente une longueur sensiblement égale à ladite portion principale (3).

3. Volant de direction (1) selon l'une quelconque des revendications précédentes, **caractérisé en ce qu'**il comprend des moyens de rappel de la portion complémentaire (4) vers la position de conduite.

4. Volant de direction (1) selon la revendication 3, **caractérisé en ce que** lesdits moyens de rappel comprennent un ressort de rappel.

5. Volant de direction (1) selon la revendication 4, **caractérisé en ce que** ledit ressort de rappel est solidaire d'une part de la portion principale (3) et d'autre part de la portion complémentaire en arc (4).

6. Volant de direction (1) selon l'une quelconque des revendications précédentes, **caractérisé en ce qu'**il comprend deux rayons (5, 5') diamétralement opposés s'étendant chacun entre le moyeu (2) et la portion principale (3), ladite portion complémentaire en arc (4) était montée à rotation à la portion principale (3) au voisinage desdits deux rayons (5, 5').

7. Volant de direction (1) selon la revendication 6, **caractérisé en ce que** la portion principale présente une partie fermée (30) rejoignant les deux rayons (5, 5') diamétralement opposés et deux extrémités libres (31, 32) s'étendant chacune depuis ladite partie fermée (30) à l'opposé des rayons (5, 5') diamétralement opposés (5, 5').

## Patentansprüche

1. Lenkrad (1) für ein Kraftfahrzeug, umfassend eine Nabe (2), die eine Drehachse definiert, einen im Wesentlichen kreisbogenförmigen Hauptabschnitt (3), der mit der Nabe (2) fest verbunden ist, und einen bogenförmigen komplementären Abschnitt (4), der mit dem Hauptabschnitt (3) fest verbunden ist, wobei der bogenförmige komplementäre Abschnitt (4) zwei entgegengesetzte Enden (4a, 4b) aufweist, die jeweils drehbar an dem bogenförmigen Hauptabschnitt (3) montiert sind, im Wesentlichen diametral entgegengesetzt;
wobei der Hauptabschnitt (3) zwei freie Enden (3a, 3b) definiert, wobei die beiden entgegengesetzten Enden (4a, 4b) jeweils drehbar an den beiden freien Enden (3a, 3b) montiert sind, so dass der bogenförmige komplementäre Abschnitt (4) aus einer Fahrposition, in welcher der bogenförmige Hauptabschnitt (3) und der bogenförmige komplementäre Abschnitt (4) eine im Wesentlichen torische konvexe Form definieren, in eine eingeklappte Position schwenken kann, in welcher der bogenförmige komplementäre Abschnitt (4) in Bezug auf die Fahrposition um 180° geschwenkt ist,
**dadurch gekennzeichnet, dass** sich der komplementäre Abschnitt (4) in der eingeklappten Position in derselben Ebene wie der Hauptabschnitt (3) erstreckt und Letzteren dabei umgibt;
wobei das Lenkrad Arretierungsmittel (40, 40') umfasst, die geeignet sind, den bogenförmigen komplementären Abschnitt (4) in der Fahrposition zu arretieren; und
wobei die Arretierungsmittel (40, 40') mindestens eine Drucktaste (40, 40') umfassen, die an dem bogenförmigen komplementären Abschnitt (4) angebracht ist.

2. Lenkrad (1) nach Anspruch 1, **dadurch gekennzeichnet, dass** der bogenförmige komplementäre Abschnitt (4) im Wesentlichen die gleiche Länge wie der Hauptabschnitt (3) aufweist.

3. Lenkrad (1) nach einem der vorhergehenden Ansprüche, **dadurch gekennzeichnet, dass** es Rückstellmittel zum Zurückstellen des komplementären Abschnitts (4) in die Fahrposition umfasst.

4. Lenkrad (1) nach Anspruch 3, **dadurch gekennzeichnet, dass** die Rückstellmittel eine Rückstellfeder umfassen.

5. Lenkrad (1) nach Anspruch 4, **dadurch gekennzeichnet, dass** die Rückstellfeder zum einen mit dem Hauptabschnitt (3) und zum anderen mit dem bogenförmigen komplementären Abschnitt (4) fest verbunden ist.

6. Lenkrad (1) nach einem der vorhergehenden Ansprüche, **dadurch gekennzeichnet, dass** es zwei diametral entgegengesetzte Speichen (5, 5') umfasst, die sich jeweils zwischen der Nabe (2) und dem Hauptabschnitt (3) erstrecken, wobei der bogenförmige komplementäre Abschnitt (4) in der Nähe der beiden Speichen (5, 5') drehbar am Hauptabschnitt (3) angebracht ist.

7. Lenkrad (1) nach Anspruch 6, **dadurch gekennzeichnet, dass** der Hauptabschnitt einen geschlossenen Teil (30) aufweist, der bis zu den beiden diametral entgegengesetzten Speichen (5, 5') reicht, und zwei freie Enden (31, 32), die sich jeweils von dem geschlossen Teil (30) aus entgegengesetzt zu den diametral entgegengesetzten (5, 5') Speichen (5, 5') erstrecken.

## Claims

1. Steering wheel (1) for a motor vehicle, comprising a hub (2) defining an axis of rotation, a main portion (3) substantially in the shape of an arc of a circle secured to the hub (2) and a complementary arc-shaped portion (4) secured to said main portion (3), wherein said complementary arc-shaped portion (4) has two opposite ends (4a, 4b) each mounted with the ability to rotate on said main arc-shaped portion (3), in a manner substantially diametrically opposed;
said main portion (3) defining two free ends (3a, 3b), said two opposite ends (4a, 4b) being mounted for rotation respectively on said two free ends (3a, 3b) so that said complementary arc-shaped portion (4) can be pivoted from a driving position in which the main arc-shaped portion (3) and the complementary arc-shaped portion (4) define a substantially toric convex shape, toward a retracted position in which the complementary arc-shaped portion (4) is pivoted through 180° with respect to the driving position,
**characterized in that** the complementary portion (4) in the retracted position extends in the same plane as the main portion (3), surrounding same;
said steering wheel comprising locking means (40, 40') able to lock the complementary arc-shaped portion (4) in the driving position; and
the locking means (40, 40') comprising at least one pushbutton (40, 40') installed on the complementary arc-shaped portion (4).

2. Steering wheel (1) according to Claim 1, **characterized in that** said complementary arc-shaped portion (4) has a length substantially equal to said main portion (3).

3. Steering wheel (1) according to either one of the preceding claims, **characterized in that** it comprises return means returning the complementary portion (4) toward the driving position.

4. Steering wheel (1) according to Claim 3, **characterized in that** said return means comprise a return spring.

5. Steering wheel (1) according to Claim 4, **characterized in that** said return spring is secured on the one hand to the main portion (3) and on the other hand to the complementary arc-shaped portion (4).

6. Steering wheel (1) according to any one of the preceding claims, **characterized in that** it comprises two diametrically opposed spokes (5, 5') each extending between the hub (2) and the main portion (3), said complementary arc-shaped portion (4) being mounted for rotation on the main portion (3) in the vicinity of said two spokes (5, 5').

7. Steering wheel (1) according to Claim 6, **characterized in that** the main portion has a closed part (30) joining the two diametrically opposed spokes (5, 5') and two free ends (31, 32) each extending from said closed part (30) on the opposite side of the diametrically opposed (5, 5') spokes (5, 5').
